(19) Europäisches Patentamt
European Patent Office
Office européen des brevets

(11) Veröffentlichungsnummer : **0 235 168 B1**

(12) **EUROPÄISCHE PATENTSCHRIFT**

(51) Int. Cl.⁵ : **G11B 15/467, G05D 13/62**

(45) Veröffentlichungstag der Patentschrift :
**11.09.91 Patentblatt 91/37**

(21) Anmeldenummer : **86904126.9**

(22) Anmeldetag : **06.06.86**

(86) Internationale Anmeldenummer :
**PCT/EP86/00341**

(87) Internationale Veröffentlichungsnummer :
**WO 87/00335 15.01.87 Gazette 87/01**

(54) **VIDEORECORDER MIT VERÄNDERBARER BILDSUCHLAUFGESCHWINDIGKEIT.**

(30) Priorität : **27.06.85 DE 3522935**

(43) Veröffentlichungstag der Anmeldung :
**09.09.87 Patentblatt 87/37**

(45) Bekanntmachung des Hinweises auf die
Patenterteilung :
**11.09.91 Patentblatt 91/37**

(84) Benannte Vertragsstaaten :
**AT BE CH DE FR GB IT LI LU NL SE**

(56) Entgegenhaltungen :
**EP-A- 0 091 188**

(56) Entgegenhaltungen :
**WO-A-84/01252**
**GB-A- 2 004 094**
**US-A- 3 668 492**
**US-A- 3 686 469**

(73) Patentinhaber : **Deutsche Thomson-Brandt GmbH**
**Hermann-Schwer-Strasse 3 Postfach 1307**
**W-7730 Villingen-Schwenningen (DE)**

(72) Erfinder : **LINK, Hermann**
**Augenmoosstrasse 10**
**W-7730 VS-Obereschach (DE)**
Erfinder : **KAADEN, Jürgen**
**Im Tannhörnle 10**
**W-7730 Villingen-Schwenningen (DE)**

# Beschreibung

Bei handelsüblichen Videorecordern nach dem Schrägspurverfahren ist es bekannt, für Kopftrommel- und Magnetbandantrieb automatische Motorsteuerungen einzusetzen, die für ein Zusammenwirken beider Antriebe optimale Gleichlaufbedingungen herstellen. Diese Präzisionssteuerungen, auch Servosteuerungen genannt, arbeiten allgemein mit zwei gekoppelten Regelkreisen. Ein Regelkreis dient der Geschwindigkeitssteuerung, er wird auch Geschwindigkeitsservo genannt und ist als Grobregelung anzusehen, während die Feinregelung zur Anpassung von Kopftrommelantrieb und Magnetbandantrieb zueinander durch einen Phasenregelkreis, auch Phasenservo genannt, durchgeführt wird.

Der Geschwindigkeitsservo stellt den Geschwindigkeitsfehler eines Motors z.B. mit Hilfe eines Frequenzgenerators fest, der mit dem Motor mechanisch gekoppelt ist und dessen Frequenz proportional zur Motordrehzahl ist. Aus dieser Frequenz wird in einem Frequenz-Spannungsumsetzer eine Gleichspannung gewonnen, die der Nachsteuerung des Motors dient, wenn Frequenzabweichungen von der Sollfrequenz vorliegen. Da eine derartige Regelung keine Verknüpfung mit Regelvorgängen anderer Motore bzw. Antriebe zuläßt, muß zusätzlich zur Geschwindigkeitsregelung eine Phasenregelung erfolgen, durch die Zuordnungen zwischen den Regelsystemen verschiedener Antriebe hergestellt werden. Für eine Phasenregelung sind Referenzquellen erforderlich, die bei der Verknüpfung von verschiedenen Regelanordnungen als gemeinsame Quelle ausgebildet sind.

So dient z.B. beim VHS-Videorecordersystem jeder zweite vom Fernsehsignal gelieferte Vertikalimpuls nach einer Umwandlung in eine Rechteckschwingung von 25 Hz, entsprechend 40 ms als Referenz für den Kopftrommelantrieb im Aufnahmebetrieb. Die Rechteckschwingung wird in eine trapezförmige Schwingung umgeformt, deren ansteigende Flanke jeweils im 40 ms-Rhythmus einem Eingang einer Sample- and Hold-Schaltung gelangt. An den zweiten Eingang dieser Schaltung werden als Vergleichssignal Impulse am Anfang einer Magnetspur aus einem Generator geliefert, der von zwei am Umfang der Kopftrommel angebrachten Magneten in Verbindung mit einer feststehenden Spule gebildet wird. Die Magnete sind unterschiedlich gepolt, so daß bei Anfang der ersten Spur ein gegenüber dem Anfang der zweiten Spur unterschiedlich gepolter Impuls geliefert wird. Da während einer Kopftrommelumdrehung zwei Halbbilder aufgezeichnet bzw. wiedergegeben werden, induzieren die Magnete im 50 Hz-Rhythmus, also alle 20 ms einen Impuls in der feststehenden Spule. Diese Impulse werden auch drum-pickup-Pulse genannt. Nur jeder zweite dieser Impulse gleicher Polung wird in der oben erwähnten Sample- and Hold-Schaltung für eine Phasenregelung ausgewertet.

Am Ausgang der Sample- and Hold-Schaltung wird eine Gleichspannung abgegeben, deren Größe sich je nach Phasenlage des kurzen drum-pickup-Pulses zur ansteigenden Flanke des Trapezsignals einstellt und für die Phasenregelung in einer Additionsschaltung zusammen mit den vom Geschwindigkeitsservo ausgegebenen Steuerspannungen ausgewertet wird.

Die umgeformten Vertikalimpulse werden außerdem auf eine besondere Steuerspur auf das Magnetband aufgezeichnet. Sie dienen bei Wiedergabe im Vergleich zu der Position des pickup Pulses des Kopftrommelantriebes zur Phasensteuerung des Magnetbandantriebes.

Ein Quarzoszillator ist Referenzquelle im Wiedergabebetrieb für die Geschwindigkeitsregelung des Kopftrommelantriebes. Auch wird dieser Quarzoszillator als Referenzquelle zusätzlich für den Magnetbandantrieb bei Aufnahme ausgenutzt. Seine Frequenz wird mit der vom Frequenzgenerator des Magnetbandantriebsmotors gelieferten Frequenz verglichen und als Regelspannung ausgegeben.

Wie bereits erwähnt, wird die Phasensteuerspannung für den Magnetbandantrieb im Wiedergabebetrieb aus dem Vergleich der auf dem Band aufgezeichneten, umgeformten Vertikalimpulse mit der Position des pickup Pulses ähnlich wie in der beschriebenen Erzeugung der Phasenregelspannung für den Kopftrommelantrieb erzeugt. Da die Eigengeschwindigkeit des Magnetbandantriebes nach der VHS-Norm innerhalb einer Toleranz von ± 0,5 % schwanken kann, ist es möglich, daß bei Abspielen von fremdbespielten Bändern durch den Phasenservo relativ große Abweichungen ausgeglichen werden müssen. Das bedeutet, daß der Phasenfehler im Rhythmus der Aufnahmegeschwindigkeitsänderung relativ stark schwankt, so daß Gleichlaufschwankungen auftreten können und in Sollphaseposition eine Spurabweichung existiert.

Aus diesem Grunde sind handelsübliche Videorecorder mit von außen zugänglichen Einstellern für eine Spurlageverstellung, sogenannten Tracking-Reglern ausgerüstet. Ein Nachstellen der Spurlage kann erforderlich sein, wenn Aufnahmen von einem Fremdrecorder wiedergegeben werden sollen. Somit können Toleranzen der einzelnen Recorder untereinander durch Verstellen des Tracking-Reglers, der z.B. den Phasenservo für Magnetbandantrieb durch Vorgabe einer festen Korrekturspannung beeinflußt, ausgeglichen werden.

Bei Bildwiedergabe im Suchlauf, d.h. bei einer vorgegebenen erhöhten Bandgeschwindigkeit vorwärts und rückwärts, besteht bei handelsüblichen Videorecordern mit nichtautomatisch spurnachgeführten Videoköpfen das Problem, daß während dieses Betriebes mehrere Magnetspuren von einem Videokopf abgetastet werden. Dabei zeigen sich im Bild Störzonen, deren sichtbare Anzahl durch die Einstellung des Tracking-Reglers so verändert werden kann, daß sie den Bildeindruck möglichst wenig verfälschen, sofern die Phasenregelung des Bandvorschubes eingeschaltet ist, was nicht bei allen Lösunger der Fall ist.

Außerdem können bei Wiedergabe von Fremdaufrahmen sowohl im Normal- als auch im Bildsuchlaufbetrieb zusätzliche Störungen durch unterschiedliche Eigengeschwindigkeiten der Videorecorder auftreten, die durch die Phasenregelung des Bandantriebes im Wiedergaberecorder nur ungenügend ausgeregelt werden.

Aus dem Dokument EP-A-0091188 ist für einen Magnetbandrecorder eine Mikroprozessor geführte Steuerung für vielfältige Anwendungen im Gerät bekannt. Unter dem Titel "Broad Automatic Scan Tracking Servo Description" ist eine mittels Mikroprozessor kontrollierte Tracking-Nachsteuerung beschrieben, bei der aus der Magnetbandgeschwindigkeit abgeleitete Nachstellsignale von einem Rampengenerator ausgegeben werden, die zur Höhenverstellung von auf Piezoelementen befestigten Magnetköpfen dienen. Durch eine angepaßte Höhenverstellung wird erreicht, daß die Magnetköpfe auch bei veränderbaren Magnetbandgeschwindigkeiten im Wiedergabebetrieb den aufgezeichneten Magnetspuren folgen können.

Es ist Aufgabe der Erfindung, für einen Videorecorder mit rotierenden, fest auf einem Drehteil angeordneten Magnetköpfen neben den für Normalgeschwindigkeit und einer vorgegebenen Bildsuchlaufgeschwindigkeit ausgelegten bekannten Servoregelungen zusätzliche automatische Regelmöglichkeiten für optimale Bildwiedergab zu schaffen, durch die beliebige Bildsuchlaufgeschwindigkeiten einstellbar sind und durch die außerdem bei Abpielen von Fremdaufnahmen bei Eigengeschwindigkeitsabweichungen Geschwindigkeitsfehler ausgeglichen werden.

Diese Aufgabe wird durch einen Videorecorder mit Servosteuerungen nach dem Oberbegriff des Anspruchs 1 gelöst, die im Kennzeichen des Anspruchs 1 beschrieben ist. Weiterbildungen der Erfindung werden in den Unteransprüchen beschrieben.

Im Prinzip wird bei jeder Bildsuchlaufgeschwindigkeit für die Spurlagenverstellung zusätzlich zu einem fest vorgegebenen Wert ein Tracking-Korrekturwert addiert oder subtrahiert. Dieser Korrekturwert kann bei stufenförmig veränderbarer Bildsuchlaufgeschwindigkeit aus der Geschwindigkeitsstufe errechnet und in einem Speicher abgelegt werden. Bei kontinuierlicher Änderung ist es möglich, während des Änderungsvorganges die jeweilige Geschwindigkeitsstufe zu bestimmen und daraus einen Korrekturwert zu errechnen. Außerdem wird bei Abspielen von Fremdaufnahmen aus einem Integrator, der die anfallenden Phasenfehlerspannungen des Bandantriebsphasenservos integriert, eine Korrekturspannung an den Geschwindigkeitsservo ausgegeben, die eine Verschiebung der Geschwindigkeitsfehlerspannung bewirkt. Dadurch wird erreicht, daß die Trackingsollposition immer der optimalen Spurlage entspricht.

Als Maß für die eingespeicherten Tracking-Korrekturwerte (Stellgrößen) dient eine minimale Anzahl nicht durch laufender, sichtbarer Störzonen im Wiedergabebild für die einzelnen Geschwindigkeiten, wobei die sichtbaren Störzonen bei einem Wiedergabehalbbild durch Abtasten von Übergängen mehrerer nebeneinanderliegender Magnetspuren bewirkt werden.

Anhand der Figuren soll die Erfindung beispielhaft näher erläutert werden, sie zeigt in einem Blockschaltbild die Servoregelung für Kopftrommel und Magnetbandantrieb bei Wiedergabe mit automatischer Trackingkompensation und automatischer Geschwindigkeitskompensation für den Magnetbandbetrieb.

Im Blockschalbild sind zwei Funktionstasten 31 und 32 eingezeichnet, bei deren Betätigen die Magnetbandgeschwindigkeit veränderbar ist, wobei durch die Vorzeichen +, - die jeweilige Laufrichtung angedeutet ist. Die Veränderung kann dabei kontinuierlich oder in einer besonderen Ausbildung der Schaltung in Stufen erfolgen. Bei Unterbrechung der Betätigung einer der Tasten wird die zuletzt eingestellte Bandgeschwindigkeit beibehalten. Durch entsprechende Betätigung einer der Tasten ist es ferner möglich, die Bandgeschwindigkeit weiter zu erhöhen oder zu verlangsamen und dabei über den Standbildwiedergabebetrieb in die entgegengesetzte Laufrichtung zu steuern.

Beim ersten Betätigen einer der Funktionstasten 31, 32 wird eine vorgegebene erhöhte Bildsuchlaufgeschwindigkeit eingestellt.

Ein direkter Wechsel der Suchlaufrichtung bei schneller Suchlauf- geschwindigkeit Kann durch Betätigen einer nicht dargestellten Pausentaste oder der Wiedergabetaste bewirkt werden.

Im Quarzoszillator 1 wird eine hochfrequente Schwingung erzeugt, die in Wiedergabebetrieb sowohl für die Geschwindigkeitsregelung des Kopftrommelantriebs als auch für die Geschwindigkeitsregelung des Magnetbandantriebs als Referenz dient.

Für die Kopftrommelgeschwindigkeitsregelung gelangt die Quarzfrequenz an den Eingang einer Frequenzvergleichsschaltung 6. Sie wird dort mit einer Tachofrequenz verglichen, die vom Frequenzgenerator 9 geliefert wird. Diese ist proportional zur Kopftrommeldrehzahl, da der Generator eine feste mechanische Zuordnung zum Kopftrommelmotor 8 hat.

Aus dem Vergleich der beiden Frequenzen in der Frequenzvergleichsschaltung 6 wird eine Gleichspannung abgeleitet, die als Steuerspannung für den Kopftrommelantrieb dient. Sie wird über die Motorregelschaltung 5 dem Kopftrommelmotor 8 zugeführt.

Ebenfalls in einer festen mechanischen Zuordnung zur Kopftrommel steht der pickup-Pulsgenerator 7. Durch eine gestrichelte Linie zwischen Kopftrommelmotor 8, dem pickup-Pulsgenerator 7 und dem Frequenzgenerator 9 wird die mechanische Zuordnung der drei Bauelemente zueinander angedeutet.

Bei Wiedergabe dienen die aus dem pickup-Pulsgenerator 7 gelieferten Impulse für den Bandantriebphasenservo als Referenz. Sie werden einem Wandler 22 zugeführt, in welchem eine Umformung in eine trapezförmige Spannung erfolgt. Die im 40 ms-Rhythmus ansteigenden Flanken dieser Spannung werden in der Sample- and Hold-Schaltung 23 mit der Phasenlage von kurzen Impulsen verglichen, die aus den am Eingang 30 zugeführten, bei der Aufnahme auf einer Kontrollspur aufgezeichneten und umgeformten Vertikalsynchronimpulsen des Fernsehsignales bestehen.

Wenn die Wiedergabe von eigenbespielten Bändern erfolgt, ist die am Ausgang 24 der Sample- and Hold-Schaltung 23 abgegebene Phasenfehlerspannung sehr gering, da Aufnahme- und Wiedergabegeschwindigkeit nur in engen Toleranzbereichen voneinander abweichen. Werden allerdings Bänder wiedergegeben, die mit einem Fremdrecorder aufgenommen worden sind, können zwischen Aufnahme- und Wiedergabegeschwindigkeit systembedingte Differenzen auftreten, die zu einer dauernden Phasenfehlerspannungsausgabe am Ausgang 24 führen. Liegt ein derartiger Fall vor, bewirkt diese Phasenfehlerspannung, die über Additionsschaltung 21 einem Integrator 27 zugeführt wird, an dessen Ausgang eine Spannungsausgabe an den Geschwindigkeitsservo, die so lange eine bleibende Veränderung im Geschwindigkeitsservoregelkreis bewirkt, bis eine neue Ausgabe aus dem Integrator erfolgt. Durch diese Maßnahme wird erreicht, daß die eigentliche Phasenregelung nur relativ geringe Phasenänderungen auszugleichen hat.

In dem beispielhaften Blockschaltbild wird diese vom Integrator 27 abgegebene Spannung an den Eingang der Frequenzvergleichsschaltung 26 gelegt, deren Ausgang mit einem ersten Eingang der weiteren Additionsschaltung 25 verbunden ist. An den zweiten Eingang wird die Phasenfehlerspannung von Ausgang 24 der Sample- and Hold-Schaltung 23 über die Additionsschaltung 21 angelegt. Die abgegebene Spannung der zweiten Additionsschaltung 25 dient der Steuerung des Bandantriebsmotors 28, der mechanisch starr mit dem Frequenzgenerator 29 verbunden ist. Am Ausgang des Frequenzgenerators entsteht eine zur Motordrehzahl proportionale Frequenz, die ihrerseits für die Geschwindigkeitsregelung der Frequenzvergleichsschaltung 26 zugeführt wird.

Zusätzlich zu der am Ausgang 24 der Sample- and hold-Schaltung 23 abgegebenen Phasenfehlerspannung wird der Additions-Schaltung 21 eine Trackingspannung 16 von einem Stellglied für Tracking 13 zugeführt, welches aus einem veränderbaren Widerstand besteht.

Diese Spannung dient der automatischen Trackingkompensation sowohl bei Normalgeschwindigkeit des Magnetbandes als auch bei unterschiedlichen Geschwindigkeiten im Bildsuchlaufbetrieb. Sie wird einerseits bei Normalgeschwindigkeit durch die Einsteller für Tracking-Voreinstellung 14 und für Tracking-Handeinstellung 15 vorgegeben, ist andererseits bei Bildsuchlaufbetrieb von Stellgrößen abhängig, die aus dem Speicher 12 abgegeben werden. Die im Speicher 12 abgelegten Stellgrößen werden aus einer Frequenz abgeleitet, die vom Frequenzgenerator des Magnetbandantriebes am Anschluß 10 der Auswerteschaltung 11 zugeführt werden. Die Auswerteschaltung 11 kann als Mikrocomputer ausgelegt sein und bei kontinuierlicher Veränderung der Bildsuchlaufgeschwindigkeit optimale Werte für die Tracking-Nachstellung ausweisen.

Der Integrator 27 kann bei Bildsuchlaufbetrieb abgeschaltet werden, kann aber auch angeschaltet bleiben und nur während einer Geschwindigkeitsänderung an seinem Ausgang zu "null" gesetzt werden. Auch ist es möglich, bei bestimmten Geschwindigkeiten, bei denen enge Phasenbeziehungen zwischen den von der Kontrollspur abgegebenen Impulsen mit der erzeugten trapezförmigen Spannung erzielt werden, eine Korrekturspannung abzugeben. Bei asynchronen Impulsen bestimmter Geschwindigkeiten, aber auch bei fehlenden Impulsen von der Kontrollspur kann der letzte Integrationswert gespeichert werden, um dadurch eine unbeabsichtigte Veränderung der Geschwindigkeit zu vermeiden.

An einen weiteren Eingang der Additionsschaltung 25 und der Auswerteschaltung 11 sind die zwei Schalter 31 und 32 angeschlossen, durch deren Betätigung die Bandgeschwindigkeit je nach Wahl des Schalters in der einen oder in der anderen Richtung veränderbar ist. Dabei ist es möglich, im Bildsuchlaufbetrieb eine Umkehrung der Motordrehrichtung zu erreichen und auch durch individuelle Einstellung der Geschwindigkeit die Anzahl der Störstreifen zu minimieren.

Bei Bildsuchlaufbetrieb ist es sinnvoll, durch eine Stummschaltung den Ton abzuschalten, jedoch bei Erreichen der vom Standard vorgegebenen Aufnahmegeschwindigkeit wieder anzuschalten.

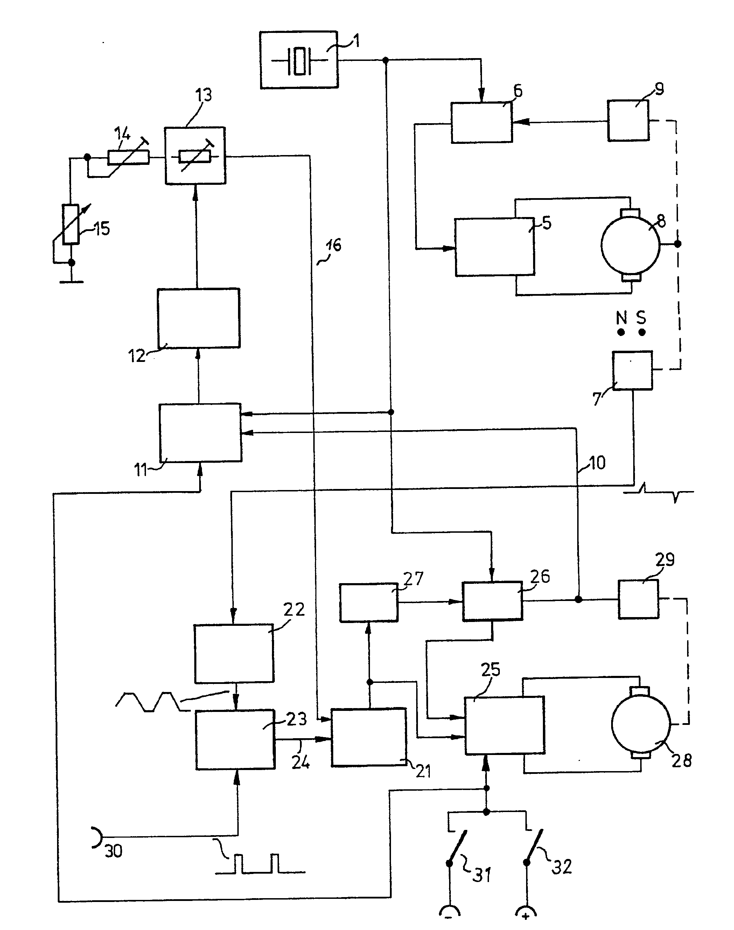

**Patentansprüche**

1. Verfahren zur Einstellung der Magnetbandgeschwindigkeit bei Wiedergabe für einen Videorecorder, welcher aufweist: einen Motor (8) für den Kopftrommel- und einen Motor (28) für den Magnetbandantrieb, elektronische Einrichtungen für die Geschwindigkeits- und Phasenregelung beider Motore, eine Tracking-Einstellmöglichkeit (14,15) und bedienbare Funktionstasten, von denen zwei Umspulfunktionstasten (31,32) bei betätigter Wiedergabetaste für Bildsuchlaufbetrieb vorwärts und rückwärts eingerichtet sind, **dadurch gekennzeichnet,** daß durch die Art bzw. Dauer der Betätigung einer der Umspulfunktionstasten (31,32) für Bildsuchlaufbetrieb eine abgestufte oder kontinuierliche Bandgeschwindigkeitsänderung durch Eingabe einer Steuerspannung (+,-) auf die Geschwindigkeitsregelschaltung des Bandantriebsmotors (28) erfolgt und zu jeder eingestellten Bildsuchlaufgeschwindigkeit die Phasenbeziehung zwischen Kopftrommel- und Magnetbandantrieb durch Ausgabe einer Trackingspannung (16) an die Bandgeschwindigkeitsregelschaltung automatisch neu eingestellt wird, wobei die Größe der Trackingspannung (16) von Stellgrößen abgeleitet wird, die in einem Speicher (12) jeder einstellbaren Geschwindigkeit zugeordnet sind.

2. Verfahren nach Anspruch 1, **dadurch gekennzeichnet,** daß bei Unterbrechung der Betätigung einer der Funktionstasten (31,32) in Bildsuchlaufbetrieb die zuletzt eingestellte Bandgeschwindigkeit beibehalten wird.

3. Verfahren nach einem der Ansprüche 1 - 2, **dadurch gekennzeichnet,** daß je nach Wahl einer der beiden Umspulfunktionstasten (31,32) während des Bildsuchlaufbetriebes die Bandgeschwindigkeit weiter erhöht oder verlangsamt wird und dabei über die Standbildwiedergabe in die entgegengesetzte Laufrichtung gesteuert wird.

4. Verfahren nach einem der Ansprüche 1 - 3, **dadurch gekennzeichnet,** daß beim ersten Betätigen einer der Funktionstasten (31,32) für Bildsuchlaufbetrieb eine vorgegebene erhöhte Bildsuchlaufgeschwindigkeit eingestellt ist.

5. Verfahren nach einem der Ansprüche 1 - 3, **dadurch gekennzeichnet,** daß ein direkter Wechsel der Suchlaufrichtung über das Drücken der Wiedergabetaste oder Pausetaste jederzeit möglich ist.

6. Verfahren nach einem der Ansprüche 1 - 5, **dadurch gekennzeichnet,** daß bei einer eingestellten Suchlaufbandgeschwindigkeit die zugeordnete Stellgröße für die Tracking-Spannung (16) aus der jeweilig eingestellten Bandgeschwindigkeit durch einen Mirkocomputer (11) ermittelt wird.

7. Verfahren nach einem des Ansprüche 1 - 6, **dadurch gekennzeichnet,** daß das Maß für die eingespeicherten Stellgrößen im Speicher (12) eine minimale Anzahl sichtbarer Störzonen, die in Vertikalrichtung des Wiedergabebildes nicht durchlaufen, für die einzelnen Geschwindigkeiten ist.

8. Verfahren nach einem der Ansprüche 1 - 7, **dadurch gekennzeichnet,** daß im Bildsuchlaufbetrieb der Ton stummgeschaltet ist und daß bei Erreichen der vom Aufzeichnungssystem vorgegebenen Normalgeschwindigkeit der Ton angeschaltet ist.

9. Verfahren nach einem der Ansprüche 1 - 8 für einen Videorecorder, bei dem die Geschwindigkeit des Bandantriebsmotors (28) im Wiedergabebetrieb durch eine Korrekturspannung veränderbar ist, welche von einem Integrator (27) geliefert wird, der bei der durch die Systemnorm festgelegten Magnetbandgeschwindigkeit Phasenfehlerspannungen Zwisehen den von der Kontrollspur des Bander kommenden Impulsen (30) und den von einem Generator (7) gelieferten Kopftrommelservoimpulsen integriert und bei ständig vorliegenden Phasenfehlern eine Korrekturspannung an die Geschwindigkeitsregelschaltung abgibt, **dadurch gekennzeichnet,** daß bei Bildsuchlaufbetrieb der Integrator

a) abschaltbar ist,

b) eingeschaltet ist und für die Zeit einer Änderung der Bandgeschwindigkeit, welche mittels einer der Umspultasten (31, 32) bewirkt wird, ohne Funktion geschaltet ist,

c) bei fehlenden Impulsen (30) von der Kontrollspur den letzten Integrationswert ständig ausgibt.

**Claims**

1. Method of adjusting the magnetic tape speed during playback for a video recorder which comprises: a motor (8) for the head drum drive and a motor (28) for the magnetic tape drive, electronic devices for the speed and phase control of both motors, a tracking adjustment facility (14, 15) and operable function keys, of which two rewind function keys (31, 32) are set up for picture search run mode forward and backward if the playback key is actuated, **characterised in that** by virtue of the nature or duration of the actuation of one of the rewind function keys (31, 32) for picture search run mode a stepped or continuous tape speed variation takes place by inputting of a control voltage (+, -) to the speed control circuit of the tape drive motor (28) and the phase relationship between head drum drive and magnetic tape drive is automatically readjusted to each set picture search run speed by outputting of a tracking voltage (16) to the tape speed control circuit, in which the value of the tracking voltage (16) is derived from regulating variables which are assigned to each settable speed in a memory (12).

2. Method according to claim 1, **characterised in that** on interruption of the actuation of one of the function keys (31, 32) in picture search run mode the last tape speed set is retained.

3. Method according to any one of claims 1 - 2, **characterised in that** depending on the selection of one of the two rewind function keys (31, 32) during picture search run mode the tape speed is further increased or reduced and in so doing is directed via the stills playback into the opposite running direction.

4. Method according to any one of claims 1 - 3,

characterised in that on the first actuation of one of the function keys (31, 32) for picture search run mode a predetermined increased picture search run speed is set.

5. Method according to any one of claims 1 - 3, characterised in that a direct change in the search run direction is possible at any time by pressing of the playback key or pause key.

6. Method according to any one of claims 1 - 5, characterised in that with a set search run tape speed the allocated regulating variable for the tracking voltage (16) is determined from the respectively set tape speed by a micro-computer (11).

7. Method according to any one of claims 1 - 6, characterised in that the criterion for the stored regulating variables in the memory (12) is a minimum number of visible interference zones which do not roll in the vertical direction of the playback picture for the individual speeds.

8. Method according to any one of claims 1 - 7, characterised in that in picture search run mode the sound is squelched and that on the reaching of the normal speed preset by the recording system the sound is switched on.

9. Method according to any one of claims 1 - 8 for a video recorder, in which the speed of the tape drive motor (28) in playback mode is variable by means of a correction voltage supplied by an integrator (27) which at the magnetic tape speed fixed by the system standard integrates phase error voltages between the pulses (30) coming from the control track of the tape and the head drum servo pulses supplied by a generator (7) and in the event of continuously present phase errors supplies a correction voltage to the speed control circuit, characterised in that in picture search run mode the integrator

    a) is disconnectable,

    b) is switched on and for the period of a change in the tape speed, which is activated by means of one of the rewind buttons (31, 32), is switched without function,

    c) in the event of an absence of pulses (30) from the control track supplies continuously the last integration value.

## Revendications

1. Procédé de réglage de la vitesse de la bande magnétique en mode de lecture pour un magnétoscope qui comprend un moteur (8) pour la commande du tambour des têtes et un moteur (28) pour la commande de la bande magnétique, des dispositifs électroniques pour le réglage de la vitesse et le réglage de phase des deux moteurs, une possibilité de réglage du centrage sur piste (14, 15) et des touches de fonction qui peuvent être actionnées, deux d'entre elles étant des touches de rebobinage (31, 32) réglées pour le mode de recherche d'image en avant et en arrière lorsque la touche de lecture est actionnée, caractérisé en ce qu'une variation de la vitesse de la bande continue ou échelonnée est effectuée grâce au type ou à la durée de l'actionnement de l'une des touches de fonction de rebobinage (31, 32) pour le mode de recherche d'image par l'entrée d'une tension de commande (+, -) sur le circuit de réglage de la vitesse du moteur de commande de la bande (28) et que la relation de phase entre la commande du tambour des têtes et la commande de la bande magnétique est réglée automatiquement à nouveau pour chaque vitesse de recherche d'image réglée par la sortie d'une tension de centrage sur piste (16) sur le circuit de réglage de la vitesse de la bande, la grandeur de la tension du centrage sur piste (16) étant dérivée de variables réglantes qui sont affectées dans une mémoire (12) à chaque vitesse réglable.

2. Procédé selon la revendication 1. caractérisé en ce que lors de l'interruption de l'actionnement de l'une des touches de fonction (31, 32) en mode de recherche d'image la dernière vitesse de bande réglée est conservée.

3. Procédé selon l'une des revendications 1 à 2, caractérisé en ce que, selon que l'on ait sélectionné l'une ou l'autre des deux touches de fonction de rebobinage (31, 32), la vitesse de la bande continue à être augmentée ou ralentie, pendant le mode de recherche d'image, et qu'elle est commandée, par la reproduction arrêt sur image, dans le sens opposé.

4. Procédé selon l'une des revendications 1 à 3, caractérisé en ce que, lors du premier actionnement de l'une des touches de fonction (31, 32) pour le mode de recherche d'image, une vitesse de recherche d'image élevée prédéterminée est réglée.

5. Procédé selon l'une des revendications 1 à 3, caractérisé en ce qu'un changement direct du sens de recherche est possible à tout moment en appuyant sur la touche de lecture ou sur la touche de pause.

6. Procédé selon l'une des revendications 1 à 5, caractérisé en ce que, pour une vitesse de recherche réglée, la variable réglante correspondante pour la tension de centrage sur piste (16) est déterminée par un micro-ordinateur (11) à partir de la vitesse de bande respectivement réglée.

7. Procédé selon l'une des revendications 1 à 6, caractérisé en ce que la grandeur des variables réglantes mémorisées dans la mémoire (12) est un nombre minimum de zones parasites visibles qui ne sont pas continues dans le sens vertical de l'image reproduite pour les différentes vitesses.

8. Procédé selon l'une des revendications 1 à 7, caractérisé en ce que le son est arrêté et rendu muet, en mode de recherche d'image, et qu'il est mis lorsque l'on a atteint la vitesse normale prédéterminée par le système d'enregistrement.

9. Procédé selon l'une des revendications 1 à 8 pour un magnétoscope dans lequel la vitesse du moteur de commande de la bande (28) est variable, en mode de lecture, par une tension de correction qui est fournie par un intégrateur (27) qui, pour la vitesse de la bande magnétique fixée par la norme du système, intègre les tensions de défaut de phase entre les impulsions qui vennent de la piste de contrôle de la bande et les impulsions de servocommande du tambour de têtes fournies par un générateur (7) et qui délivre, en cas de défauts de phase constamment présents, une tension de correction au circuit de réglage de la vitesse, **caractérisé en ce** qu'en mode de recherche d'image, l'intégrateur

　　　a) peut être mis hors circuit,
　　　b) est mis en circuit et est commuté sans fonction pour la durée d'une modification de la vitesse de la bande qui est provoquée au moyen d'une des touches de rebobinage (31, 32),
　　　c) délivre constamment la dernière valeur d'intégration (31, 32), en cas de manque d'impulsions (30) de la piste de contrôle.